(19) Europäisches Patentamt

European Patent Office

Office européen des brevets

(11) **EP 0 982 828 A2**

(12) **EUROPÄISCHE PATENTANMELDUNG**

(43) Veröffentlichungstag:
01.03.2000 Patentblatt 2000/09

(51) Int. Cl.⁷: **H02J 3/18**

(21) Anmeldenummer: **99115592.0**

(22) Anmeldetag: **06.08.1999**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **19.08.1998 DE 19837651**

(71) Anmelder:
**SIEMENS AKTIENGESELLSCHAFT
80333 München (DE)**

(72) Erfinder:
**Körner, Andre, Dipl.-Ing.
21244 Buchholz (DE)**

(54) **Verfahren und Vorrichtung zur Blindleistungskompensation in Bordnetzen**

(57)    Die Erfindung richtet sich auf ein Verfahren und eine Vorrichtung zur Blindleistungskompensation in dem mit Wechselstrom gespeisten Bordnetz eines Fahrzeugs, insbesondere eines Schiffs, an welches induktive Verbraucher (20,10,11) angeschlossen und/oder anschließbar sind, unter Verwendung eines oder mehrerer, zum Antrieb bordeigener Einrichtungen bestimmter, elektrischer Motoren (24) als Blindleistungsgeneratoren für das Bordnetz.

Fig. 1

**Beschreibung**

Die Erfindung richtet sich auf ein Verfahren sowie auf eine Vorrichtung zur Blindleistungskompensation in dem mit Wechselstrom gespeisten Bordnetz eines Fahrzeugs, insbesondere eines Schiffs, an welches induktive Verbraucher angeschlossen und/oder anschließbar sind.

Die Ozeane werden von größeren und immer größeren Schiffen befahren. Moderne Kreuzfahrt-, Container- und insbesondere Tankschiffe haben eine Länge von mehreren hundert Metern und enthalten hochkomplizierte, technische Ausrüstungen. Diese umfassen eine Vielzahl von elektrischen Verbrauchern, insbesondere Elektromotoren zum Antrieb der unterschiedlichsten Einrichtungen wie bspw. Lenk- sowie Be- und Entladepumpen, Be- und Entladekräne, Aggregate zur Versorgung von Kühlcontainern mit temperierter Luft oder Maschinen zum Bewegen des Ruders und insbesondere an Bug und/oder Heck angebaute Querstrahlruder, welche die Manövrierfähigkeit der Schiffe im Hafenbereich und bei An- und Ablegemanövern verbessern, ferner elektrische Ankerwinden, elektrische Bootswinden zum Niederlassen und Hochziehen von Beibooten, etc. Zu diesen Großverbrauchern treten eine Vielzahl von weiteren, elektrischen Verbrauchern wie Beleuchtungseinrichtung, Navigations- und Funkanlage, Kombüse. Zur Versorgung all dieser Verbraucher mit elektrischer Energie dient ein Niederspannungs-Drehstromnetz, das von bordeigenen Generatoren gespeist wird. Nicht selten, insbesondere bei elektrischer Speisung der Vortriebseinrichtung, bspw. eines oder mehrerer Schottel-Antriebe, ist der Leistungsdurchsatz des Bordnetzes derart hoch, daß dem Niederspannungsnetz ein Mittelspannungsnetz, bspw. mit 6,6 kV, überlagert ist. Die Vielzahl von elektrischen Verbrauchern, insbesondere von motorischen Antrieben der vielfältigsten Art, verursacht einen hohen Blindleistungsbedarf in dem Bordnetz eines derartigen Schiffs.

Andererseits werden die den Strom erzeugenden Generatoren üblicherweise von Dieselmotoren angetrieben. Hierbei stellt der hohe Blindleistungsbedarf in dem Bordnetz oftmals ein großes Problem dar, da jene die Scheinleistung heraufsetzt, welche die Leistungsabgabe eines Generators begrenzt. Hierdurch kann dieser nicht seine volle Wirkleistung abgeben, sondern nur einen u. U. bis auf die Hälfte reduzierten Wert, so daß die Generatoranlage entsprechend überdimensioniert werden muß. Außerdem laufen die angeschlossenen Dieselmotoren sodann nur in einem Teillastbereich und sind dadurch einem erhöhten Verschleiß ausgesetzt, was die Lebensdauer der Dieselaggregate erheblich verkürzt und sich demzufolge äußerst negativ auf die Gesamtkosten der elektrischen Anlage auswirkt. Aus diesen Gründen wird häufig eine zusätzliche Blindleistungsmaschine vorgesehen, welche die notwendige Blindleistung für das Bordnetz erzeugt, so daß die Generatoranlage für die notwendige Wirkleistung ausgelegt werden kann und die Dieselmotoren überwiegend im Vollastbereich gefahren werden können.

Derartige Blindleistungsmaschinen sind unbedingt erforderlich, wenn anstelle von Dieselgeneratoren Wellengeneratoren verwendet werden, welche an den von der Hauptmaschine angetriebenen Propellerwellen angekoppelt sind, da jene nicht zur Abgabe von Blindleistung konzipiert sind.

Blindleistungsgeneratoren werden als Synchronmaschinen ausgebildet, die an das Bordnetz gekoppelt sind, weitgehend unbelastet laufen und durch Verstellung ihrer Erregung die erforderliche Blindleistung aufbringen können. Derartige Blindleistungsgeneratoren verteuern die Installationskosten für das Bordnetz nicht unerheblich, benötigen ein solides Fundament, vergrößern das Gewicht und den Platzbedarf der technischen Schiffseinrichtung und wirken sich somit ungünstig auf die mögliche Ladekapazität aus.

Aus den beschriebenen Nachteilen des vorbekannten Stands der Technik resultiert das die Erfindung initiierende Problem, ein Verfahren und eine Vorrichtung zur Blindleistungskompensation in Bordnetzen, insbesondere von Schiffen, zu schaffen, welche eines möglichst geringen Zusatzaufwandes bedarf, so daß die Wirtschaftlichkeit eines derart ausgerüsteten Fahrzeugs weiter gesteigert ist.

Das erfindungsgemäße Verfahren zur Blindleistungskompensation in dem mit Wechselstrom gespeisten Bordnetz eines Fahrzeugs, insbesondere eines Schiffs, an welches induktive Verbraucher angeschlossen und/oder anschließbar sind, zeichnet sich dadurch aus, daß ein oder mehrere Elektromotoren für den Antrieb bordeigener Einrichtungen als Blindleistungsgeneratoren Verwendung finden.

Die Erfindung geht dabei aus von der Erkenntnis, daß eine Reihe von motorischen Großverbrauchern, welche bislang mit Drehstrom-Asynchronmotoren realisiert wurden, nur äußerst selten benötigt werden, bspw. die Be- und Entladepumpen beim Befüllen oder Entleeren der Tanks, Kräne während der Übernahme oder Löschung von Fracht, Querstrahlruder während des Manövrierens in Hafennähe oder die Ankerwinde beim Absenken oder Anheben des Ankers. Während dieser Phasen sind jeweils andere, elektrische Großverbraucher abgeschaltet oder leistungsmäßig erheblich gedrosselt, bspw. elektrische Schottel-Antriebe. Da somit kaum Anwendungsfälle denkbar sind, wo alle elektromotorischen Verbraucher des Bordnetzes gleichzeitig aktiv sind, so ist es möglich, einen Teil derselben bei entsprechender Auslegung während nicht benötigter Zeiträume zur Erzeugung der Blindleistung für andere elektrische Verbraucher zu verwenden. Hierdurch entfällt die Notwendigkeit eines zusätzlichen Blindleistungsgenerators, so daß hinsichtlich der erforderlichen Fundamentierung wie auch hinsichtlich des notwendigen Gewichts- und Platzbedarfs erhebliche Einsparungen möglich sind, ohne die Vorteile der Blindleistungskompensation aufgeben zu müssen. Die von der Erfindung zur Verwendung als Blindleistungsgeneratoren bevorzugtesten Motoren sind diejenigen für die Querstrahlruder, da dieselben ohnehin für eine sehr große Leistung ausgelegt sein müssen und andererseits ausschließlich während eines relativ kurzen Zeitraums in Hafennähe eingeschalten werden, während für die Navigation auf hoher See die Rudermaschine für das Ruderblatt ausreichend ist.

Es liegt im Rahmen der Erfindung, daß als Blindleistungsgeneratoren übererregte Synchronmotoren Verwendung finden. Zwar sind Synchronmotoren im allgemeinen etwas teurer als Asynchronmotoren, diese erhöhten Investitionskosten werden jedoch durch die Einsparung eines zusätzlichen Blindleistungsgenerators mehr als ausgeglichen. Die Tatsache, daß Synchronmotoren beim Antrieb einer angekuppelten Einrichtung in ihrer Drehzahl gegenüber der Frequenz des Bordnetzes nicht verstellt werden können, ist für die meisten Anwendungsfälle unwichtig, da die Betriebsdrehzahl der meisten Verbraucher nicht verändert werden muß. Dies gilt insbesondere für Querstrahlruder, Be- und Entladepumpen und -kräne, Ankerwinden, etc. Sofern die Erregung des betreffen Synchronmotors verstellbar ist, kann die Blindleistungserzeugung dem jeweiligen Bedarf optimal nachgeführt werden. Dieser kann dabei durch Messung des Leistungsfaktors cos φ bestimmt werden.

Es hat sich als günstig erwiesen, daß die als Blindleistungsgeneratoren verwendbaren Antriebsmotoren von der betreffenden angetriebenen Maschine abkoppelbar sind. Hierdurch ist es möglich, die betreffende Maschine zwischen den motorischen Antriebsphasen als leerlaufenden Blindleistungsgenerator zu verwenden. Je nach Einsatzfall kann dabei die abgekuppelte Maschine entweder festgebremst sein oder - wie bspw. Querstrahlruder und Ladepumpen - in einen freilaufenden Zustand versetzt werden.

Zwar ist es denkbar, durch Verwendung einer im Betrieb schaltbaren Kupplung die anzutreibende Einrichtung an den mit Nenndrehzahl laufenden Synchronmotor zu koppeln, so daß dieser permanent zur Blindleistungserzeugung verwendet werden könnte. Dies ist jedoch aufgrund der dafür benötigten, aufwendigen Rutschkupplungen nicht angestrebt. Vielmehr sieht die Erfindung vor, daß die als Blindleistungsgeneratoren verwendbaren Antriebsmotoren über eine Schaltkupplung im Stillstand an die betreffende Einrichtung an- bzw. von dieser abgekuppelt werden. Entsprechende Schaltkupplungen sind relativ preiswert und in Anbetracht der Tatsache völlig ausreichend, daß die für die Betätigung der Schaltkupplung notwendigen Betriebspausen der Blindleistungsgeneratoren/Antriebsmotoren ausschließlich im Hafenbereich auftreten, bspw. während des Manövrierens mit den Querstrahlrudern oder beim Be- und Entladen. Hierbei sind jedoch die meisten anderen Verbraucher wie bspw.

ein elektrischer Schiffsantrieb, etc. abgeschalten, so daß von den Dieselgeneratoren vorübergehend die um die Blindleistung erhöhte Scheinleistung abgegeben werden kann.

Indem die als Blindleistungsgeneratoren verwendbaren Antriebsmotoren mit einem Trennschalter von dem Netz abgetrennt bzw. an dieses angeschlossen werden, können die erfindungsgemäßen Blindleistungsgeneratoren/Antriebsmotoren zwecks Betätigung der Schaltkupplung vorübergehend abgeschalten werden. Um diese Schaltpausen abzukürzen, können die als Blindleistungsgeneratoren verwendbaren Antriebsmotoren durch Kurzschluß von rotor- und/oder statorseitigen Wicklungen angelassen bzw. abgebremst werden. Hierfür können entsprechend dimensionierte Erregungs- und/oder Ankerwicklungen Verwendung finden, oder aber zusätzliche Kurzschlußwicklungen. Durch Kurzschluß einer rotorseitigen Wicklung ist dabei ein asynchroner Anlauf möglich, während durch Speisung statorseitiger Wicklungen mit Gleichstom die synchrone Drehzahl realisiert werden kann. Natürlich ist es auch möglich, statt dessen einen zusätzlichen Anlaß- oder Ponymotor vorzusehen und/oder eine zusätzliche Bremse.

Die erfindungsgemäße Vorrichtung zur Blindleistungskompensation in dem Bordnetz eines Fahrzeugs, insbesondere eines Schiffs zeichnet sich durch wenigstens eine Synchronmaschine aus, die sowohl zur Blindleistungserzeugung dient wie auch mit einer Einrichtung des betreffenden Fahrzeugs zu deren Antrieb gekoppelt und/oder koppelbar ist. Wie oben bereits ausgeführt, macht sich die Erfindung den Vorteil zunutze, daß ein Synchronmotor im Gegensatz zu einem Asynchronmotor in der Lage ist, weitgehend unabhängig von der abgegebenen Wirkleistung auch Blindleistung zu erzeugen und dieselbe zur Kompensation anderer Verbraucher in das Bordnetz einzuspeisen. Der Erfindungsgedanke zielt dahin, daß etwa ein oder zwei der leistungsstärksten Elektromotoren für Hilfseinrichtungen des Schiffs als Synchronmaschinen ausgebildet sind, während die übrigen Verbraucher wie bisher als Blindleistung aufnehmende Asynchronmotoren ausgebildet sein können.

Die von der für die erfindungsgemäße Doppelfunktion als Blindleistungsgenerator wie auch als Antriebsmotor konzipierten Synchronmaschine erzeugte und in das Bordnetz eingespeiste Blindleistung kann durch Verstellung der Erregung in der Synchronmaschine beeinflußt werden. Dies kann entweder über eine Steuerung erfolgen oder über eine Regelung, deren Regelgröße aus dem Leistungsfaktor cos φ ableitbar ist.

Der geringste Zusatzaufwand ist erforderlich, wenn die erfindungsgemäße(n) Synchronmaschine (n) an diejenige Hilfseinrichtung des betreffenden Fahrzeugs gekoppelt und/oder koppelbar ist (sind), welche die größte Leistungsaufnahme besitzen, da hier möglicherweise überhaupt keine Überdimensionierung notwendig ist, um bei dem Betrieb als Blindleistungsgenerator die gesamte, von dem Bordnetz benötigte Blindleistung erzeugen zu können. Unter diesem Gesichtspunkt strebt die Erfindung bei Schiffen mit Querstrahlrudern an, daß die als Blindleistungsgenerator(en) verwendbare(n) Synchronmaschine(n) mit (je) einem Querstrahlruder gekoppelt und/oder koppelbar ist (sind). Diese Querstrahlruder werden darüber hinaus zumeist nur während des Manövrierens im Hafenbereich benötigt und sind daher während der meisten Zeit inaktiv, so daß die bisher hierfür verwendeten, leistungsstarken Asynchronmotoren nur wenig ausgelastet sind.

Ebenfalls hat es sich bewährt, die erfindungsgemäße(n) Synchronmaschine(n) mit (je) einer Lade- oder Entladepumpe zu koppeln und/oder koppelbar auszugestalten. Auch diese Einrichtungen werden ausschließlich im Hafenbereich benötigt, wenn fast alle anderen Verbraucher stillgesetzt sind.

Es hat sich als günstig erwiesen, daß die erfindungsgemäße(n) Synchronmaschine (n) über (je) eine Schaltkupplung mit der betreffenden Einrichtung gekoppelt ist (sind). Durch Ausrücken dieser Schaltkupplung während der Fahrt, insbesondere außerhalb des Hafenbereichs, können die betreffenden Synchronmaschinen von der angetriebenen Einrichtung abgekoppelt werden und stehen nun als reine Blindleistungsgeneratoren zur Verfügung, die sich in elektrischer Hinsicht nicht von einem zusätzlichen Blindleistungsgenerator unterscheiden.

Um die Synchronmaschine(n) über preiswerte Schaltkupplungen mit der betreffenden Einrichtung koppeln zu können, muß die Möglichkeit geschaffen sein, daß die Kupplung bei Stillstand der angetriebenen Einrichtung betätigt werden kann. Das Stillsetzen des betreffenden Antriebssatzes erfolgt dabei über Trennschalter, insbesondere über Lasttrennschalter, welche auch bei Nennstrom abgeschalten werden können. Solchenfalls kann bei dem kurzfristigen Bedürfnis nach Aktivierung einer Hilfseinrichtung, bspw. eines Querstrahlruders, der Blindleistungsgenerator direkt vom Netz getrennt und sodann abgebremst werden.

Um den Abbremsvorgang auf einen minimalen Zeitraum zu beschränken, kann eine Möglichkeit vorgesehen sein,eine Statorwicklung kurzzuschließen oder mit einer Gleichspannung zu speisen. Natürlich kann statt dessen auch eine zusätzliche Bremse vorgesehen sein.

Nachdem die erfindungsgemäße Synchronmaschine den Stillstand erreicht hat und der Kupplungsvorgang abgeschlossen ist, muß die betreffende Synchronmaschine auf die synchrone Drehzahl beschleunigt werden. Dies kann vorzugsweise dadurch erfolgen, daß mittels einer kurzgeschlossenen und/oder kurzschließbaren Rotorwicklung ein asynchroner Hochlauf erfolgt, nachdem der betreffende Lasttrennschalter geschlossen wurde. Die Synchronmaschine läuft hierdurch bis zu einer Drehzahl hoch, welche um den Schlupf gegenüber der synchronen Drehzahl reduziert ist. Wird sodann die Erregung eingeschalten, so wird die Maschine auf die synchrone Drehzahl beschleunigt. Natürlich kann anstelle oder zusätzlich zu diesem selbsttätigen Hochlauf auch ein Ponymotor zum Anlassen der Synchronmaschine vorgesehen sein.

Weitere Merkmale, Einzelheiten, Vorteile und Wirkungen auf der Basis der Erfindung ergeben sich aus der nachfolgenden Beschreibung einiger bevorzugter Beispiele der Erfindung sowie anhand der Zeichnung. Diese zeigt in:

FIG. 1     das Blockschaltbild eines erfindungsgemäßen Schiffsbordnetzes, das von Dieselgeneratoren gespeist wird und zwei elektrische Antriebsmotoren aufweist;

FIG 2     eine weitere, gegenüber FIG 1 geringfügig abgewandelte Ausführungsform der Erfindung; sowie

FIG 3     eine weitere Ausführungsform der Erfindung mit einem Bordnetz, das von einem Wellengenerator gespeist wird.

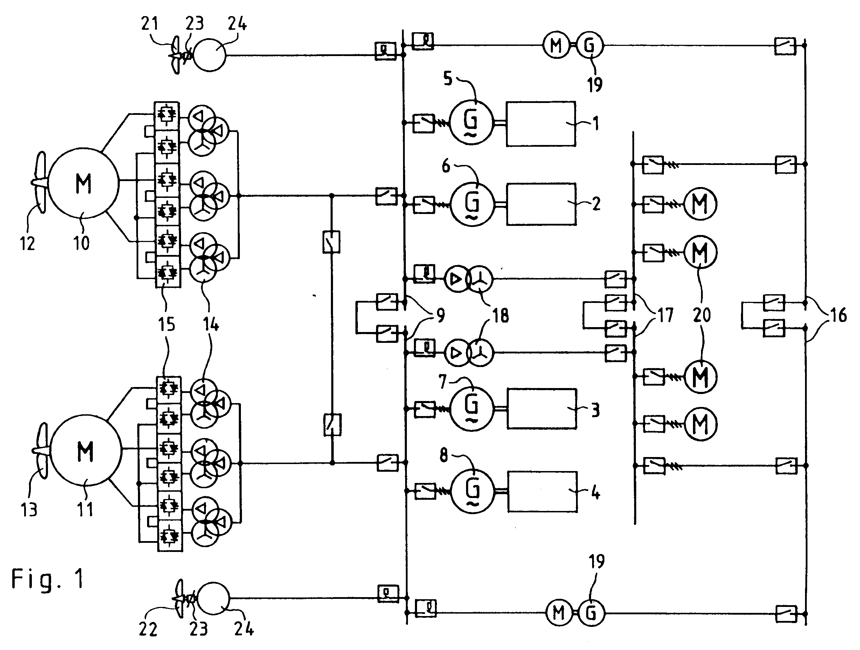

FIG 1 zeigt ein Blockschaltbild des Bordnetzes eines Schiffes. Das Netz wird gespeist durch vier Dieselaggregate, bestehend aus je einem Dieselmotor 1 - 4 und je einem angekoppelten Generator 5 - 8, welche jeweils für die maximale Dieselausgangsleistung von 5,02 MW ausgelegt sind und parallel auf eine Mittelspannungsschiene 9 mit einer Spannung von 6,6 kV und einer Frequenz von 60Hz arbeiten. An die Hochspannungsschiene 9 sind zwei elektrische Antriebsmaschinen 10, 11 für je einen Schottelantrieb 12, 13 angekoppelt. Die Ankopplung erfolgt über Drehstromtransformatoren 14 von der Bauart Dy5 Dd0, wobei jede Phase der Antriebsmotoren 10, 11 über Stromrichter 15 steuerbar ist. Die Antriebsmotoren 10, 11 haben eine maximale Leistung von 6,65 MW, bei einer Nennspannung von 4,67 kV und einer Nenndrehzahl von 158 U/min. Der Leistungsfaktor $\cos \varphi$ eines Antriebs 10, 11 liegt bei 0,73.

Ferner ist im Rahmen des Bordnetzes eine Niederspannungsschiene 16, 17 mit einer Nennspannung von 450 V und einer Frequenz von 60 Hz vorgesehen, die über parallel betreibbare Transformatoren 18 mit der Mittelfrequenzschiene 9 koppelbar ist. Um die Frequenz des Niederspannungsnetzes 16, 17 an Verbraucher mit anderen Nennfrequenzen, bspw. 50 Hz, anzupassen, kann die Ankopplung des Niederspannungsnetzes 16, 17 an die Mittelspannungsschiene 9 anstelle über die Transformatoren 18 auch mittels Umformersätzen 19 erfolgen. Die Verbraucher 20 des Niederspannungsnetzes 16, 17, bspw. die Ankerwinde, die Rudermaschine, Bootswinden, ferner Beleuchtung und sonstige Elektroinstallation belastet das Niederspannungsnetz 16, 17 mit nicht mehr als 3,2 MW; der betreffende Leistungsfaktor des Niederspannungsnetzes 16, 17 liegt bei 0,8.

Ferner ist ein elektrisch anzutreibendes Bugquerstrahlruder 21 sowie ein weitgehend identisches Heckquerstrahlruder 22 vorhanden. Die Antriebsleistung für diese Querstrahlruder liegt bei jeweils etwa 0,8 MW und wird bei herkömmlichen Anordnungen durch Asynchronmotoren aufgebracht, welche an das Mittelspannungsnetz 9 angekoppelt sind. Andererseits werden diese Querstrahlruder 21, 22 ausschließlich während des Manövrierens im Hafenbereich benötigt und können deshalb über im Stillstand schaltbare Kupplungen 23 während der Fahrt auf hoher See von dem betreffenden Motor 24 abgekoppelt werden. Die Erfindung sieht daher vor, für diese Motoren 24 Synchronmotoren zu verwenden, die in abgekoppeltem Zustand als Blindleistungsgeneratoren auf die Mittelspannungsschiene 9 arbeiten können und hierbei eine Blindleistung von jeweils 2 MVAr abzugeben in der Lage sind. Hierdurch kann während der Fahrt auf hoher See die von dem Netz benötigte Blindleistung um 4 MVAr gesenkt werden.

Geht man von einem Betriebstall aus, wo zwei Dieselaggregate 1, 2 laufen, so liegt die maximale Generatorleistung bei 10,04 MW. Bei einem Bordnetz-Leistungsbedarf von 3,2 MW stehen demnach noch 6,84 MW für die Antriebsmotoren 10, 11 zur Verfügung. Bei dieser verringerten Leistungsaufnahme können die Motoren noch mit einer Drehzahl von 133 U/min laufen, und entsprechend verschlechtert sich ihr Leistungsfak-tor cos φ auf etwa 0,614. Hieraus berechnet sich eine von den Antriebsmotoren 10, 11 aufgenommene Scheinleistung von 11,14 MVA, die Antriebs-Blindleistung liegt bei 8,79 MVAr.

Andererseits entspricht ein Leistungsfaktor von 0,8 in dem Niederspannungsbordnetz 16, 17 einem sin φ von 0,6, also einer Bord-Blindleistung von 3,2 x 0,6 MVAr = 1,92 MVAr.

Die gesamte Blindleistung in dem Bordnetz liegt daher bei 8,79 MVAr + 1,92 MVAr = 10,71 MVAr.

Bei einer maximalen Gesamtantriebsleistung von 10,04 MW ergibt sich somit eine gesamte Scheinleistung von 14,68 MVA. Hieraus errechnet sich ein Gesamtleistungsfaktor cos φ von 0,684.

Werden nun die Synchronmotoren 24 mit den Schaltkupplungen 23 von den Querstrahlrudern 21, 22 abgekoppelt und sodann wieder an das Mittelspannungsnetz 9 angeschlossen, auf synchrone Drehzahl beschleunigt und daraufhin durch Übererregung zur Abgabe von Blindleistung in Höhe von jeweils etwa 2 MVAr bewegt, reduziert sich der Blindleistungsbedarf im Bordnetz auf 6,71 MVAr, und damit die Scheinleistung auf 12,08 MVA. Diese führt zu einem verbesser-ten Gesamtleistungsfaktor cos φ von 0,831. Demnach können die Dieselaggregate und insbesondere die Generatoren 5 - 8 anstelle für einen Leistungsfaktor von 0,68 bei der erfindungsgemäßen Anordnung für einen Leistungsfaktor von 0,83 ausgelegt werden. Diese um mehr als 2,5 MVA reduzierte Scheinleistung wirkt sich günstig auf die Gesamtkosten der Anlage aus wie auch der Wegfall eines zusätzlichen Blindleistungsgenerators, so daß die Mehrkosten für die Realisierung der Motoren 24 als Synchronmotoren sowie für die Schaltkupplungen 23 mehr als wett gemacht werden.

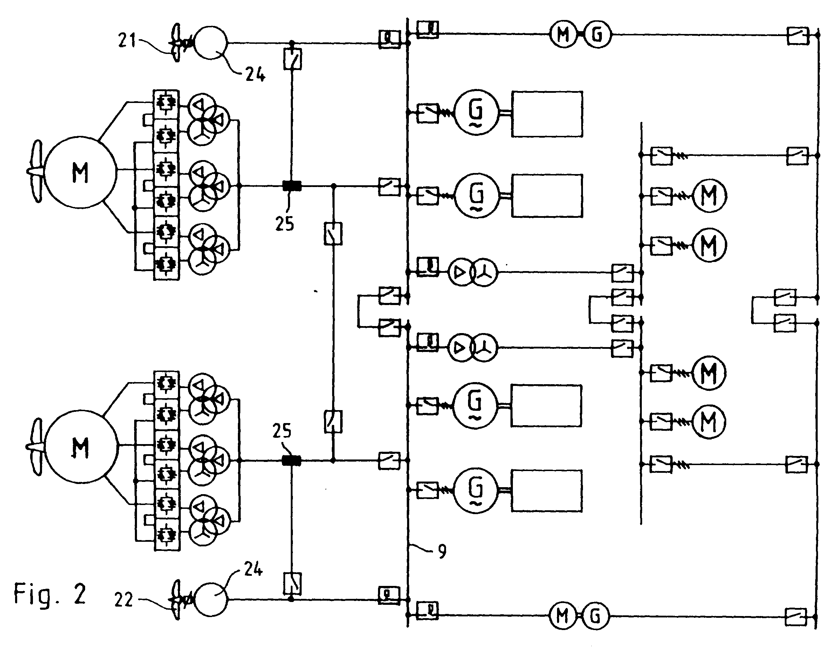

Die Anlage nach FIG 2 ist weitgehend identisch mit dem Schiffs-Bordnetz nach Figur 1 mit dem Unterschied, daß hier die an die Querstrahlruder 21, 22 ankuppelbaren Synchronmaschinen 24 über Duplexdrosseln 25 an das Mittelspannungsnetz 9 ankoppelbar sind. Die Verwendung derartiger Duplexdrosseln 25 bietet den Vorteil, daß die Netzrückwirkungen der die Schottelantriebe speisenden Stromrichter 15 reduziert werden.

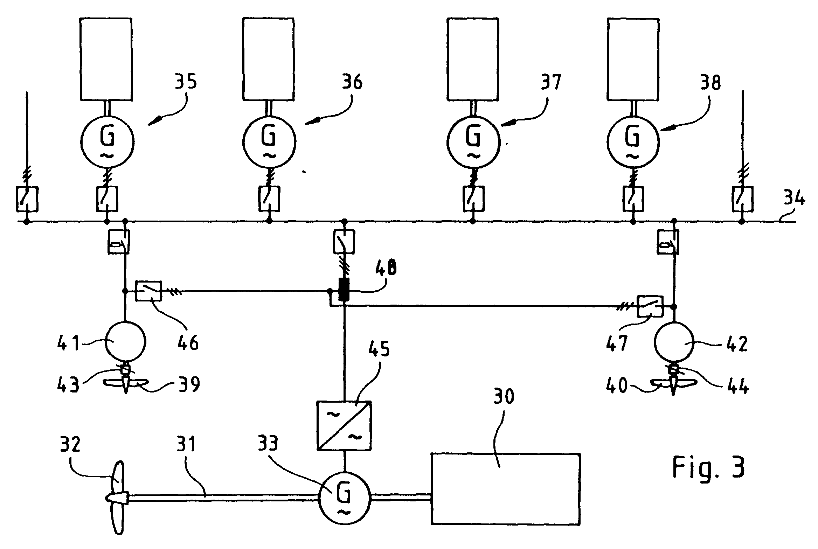

Schließlich ist in FIG 3 ein weiterer Anwendungsfall dargestellt, wo anstelle elektrischer Antriebsmotoren eine Diesel-Hauptmaschine 30 vorgesehen ist, welche über eine Welle 31 den Antriebspropeller 32 dreht. An der Welle 31 ist ein Wellengenerator 33 angekoppelt, der einen Teil der elektrischen Energie für das Bordnetz 34 liefert. Daneben sind wiederum vier Dieselaggregate 35 - 38 vorgesehen, die parallel an das Bordnetz 34 angekoppelt werden können. Auch hier sind zwei Querstrahlruder 39, 40 vorgesehen, deren Antriebsmotoren 41, 42 als Synchronmotoren ausgebildet und von dem betreffenden Querstrahlruder 39, 40 vermittels je einer Schaltkupplung 43, 44 abgekuppelt werden können, um sodann als Blindleistungsgeneratoren betrieben werden zu können. Auch bei diesem Bordnetz ist die Ankopplung dieser Blindleistungsgeneratoren 41, 42 über Duplexdrosseln 48 vorgesehen, welche in die Zuleitungen von einem dem Wellengenerator 33 nachgeschalteten Umformer 45 zu dem Bordnetz 34 eingeschaltet sind, um die Netzrückwirkungen des Umformers zu reduzieren. Die Trennung der Synchronmotoren 41, 42 von dem Bordnetz 34 erfolgt über Lasttrennschalter 46, 47, so daß die Blindleistungsgeneratoren 41, 42 sofort von dem Bordnetz 34 getrennt werden können.

Bei Verwendung eines Bordnetzes mit zwei oder mehr Spannungen hat es sich als günstig erwiesen, derartige Motoren wahlweise als Blindleistungsgeneratoren einzusetzen, welche an der von den Dieselaggregaten und/oder Wellengeneratoren gespeisten Schiene laufen, vorzugsweise derjenigen mit der höchsten Spannung. Dies ist im allgemeinen bei den Antriebsmotoren für die Querstrahlruder ohnehin der Fall; sofern andere Motoren hierfür verwendet werden sollten, bspw. Antriebsmotoren für Be- oder Entladepumpen, für die Ankerwinde, etc., so empfiehlt es sich, diese Motoren für die höhere Spannung auszulegen und an die betreffende Schiene des Bordnetzes anzuschließen.

**Patentansprüche**

1. Verfahren zur Blindleistungskompensation in dem mit Wechselstrom gespeisten Bordnetz (9,16,17;34) eines Fahrzeugs, insbesondere eines Schiffs, an welches induktive Verbraucher (10,11,20) angeschlossen und/oder anschließbar sind, **gekennzeichnet** durch die Verwendung eines oder mehrerer, elektrischer, zum Antrieb bordeigener Einrichtungen (21,22;39,40) bestimmter Motoren (21;41,42) als Blindleistungsgenerator für das Bordnetz (9,16,17;34).

2. Verfahren nach Anspruch 1, **dadurch gekennzeichnet**, daß als Blindleistungsgeneratoren vorzugsweise übererregte Synchronmotoren (21;41,42) verwendet werden.

3. Verfahren nach Anspruch 1 oder 2, **dadurch gekennzeichnet**, daß die als Blindleistungsgeneratoren verwendbaren Motoren (24;41,42) von der betreffenden, angetriebenen Einrichtung (21,22;39,40) abkuppelbar sind.

4. Verfahren nach Anspruch 3, **dadurch gekennzeichnet**, daß die als Blindleistungsgeneratoren verwendbaren Motoren (24;41,42) über eine Schaltkupplung (23; 43,44) im Stillstand an die betreffende Einrichtung (21;39, 40) an- bzw. von dieser abgekuppelt werden.

5. Verfahren nach einem der vorhergehenden Ansprüche, **dadurch gekennzeichnet**, daß die als Blindleistungsgeneratoren verwendbaren Motoren (24;41,42) mit einem Trennschalter (46,47) von dem Netz (9;16,17;34) abgetrennt bzw. an dieses angeschlossen werden.

6. Verfahren nach einem der vorhergehenden Ansprüche, **dadurch gekennzeichnet**, daß die als Blindleistungsgeneratoren verwendbaren Motoren (24;41,42) durch Kurzschluß der Erregungs- und/oder Statorwicklungen angelassen bzw. abgebremst werden.

7. Vorrichtung zur Blindleistungskompensation in dem mit Wechselstrom gespeisten Bordnetz (9;16,17;34) eines Fahrzeugs, insbesondere eines Schiffs, an welches induktive Verbraucher (10,11,20) angeschlossen und/oder anschließbar sind, **gekennzeichnet** durch wenigstens eine Synchronmaschine (24;41,42) zur Blindleistungskompensation, die mit einer Einrichtung (21;39,40) des Fahrzeugs zu deren Antrieb gekoppelt und/oder koppelbar ist.

8. Vorrichtung nach Anspruch 7, **dadurch gekennzeichnet**, daß die erzeugbare Blindleistung durch Steuerung und/oder Regelung der Erregung der Synchronmaschine (24;41,42) beeinflußbar ist.

9. Vorrichtung nach Ansprüche 7 oder 8 **dadurch gekennzeichnet**, daß die Synchronmaschine(n) (24; 41,42) mit (je) einem Querstrahlruder (21,22;39,40) gekoppelt und/oder koppelbar ist (sind).

10. Vorrichtung nach einem der Ansprüche 7 bis 9, **dadurch gekennzeichnet**, daß die Synchronmaschine(n) (24;41,42) mit (je) einer Lade- oder Entladepumpe gekoppelt und/oder koppelbar ist (sind).

11. Vorrichtung nach einem der Ansprüche 7 bis 10 **dadurch gekennzeichnet**, daß die Synchronmaschine(n) (24;41,42) über eine Schaltkupplung (23;43,44) mit der betreffenden Einrichtung (21,22;39,40) gekoppelt sind.

12. Vorrichtung nach einem der Ansprüche 7 bis 11, **dadurch gekennzeichnet**, daß die Synchronmaschine(n) über wenigstens einen Trennschalter (45,47) insbesondere Lasttrennschalter, mit dem Bordnetz (9,16,17;34) gekoppelt ist (sind).

13. Vorrichtung nach einem der Ansprüche 7 bis 12, **dadurch gekennzeichnet**, daß die Synchronmaschine(n) (24;41,42) mit einer kurzgeschlossenen und/oder kurzschließbaren Rotorwicklung versehen ist (sind).

14. Vorrichtung nach einem der Ansprüche 7 bis 13, **dadurch gekennzeichnet**, daß die Synchronmaschine(n) (24;41,42) mit einer kurzschließbaren und/oder mit Gleichspannung speisbaren Statorwicklung versehen ist (sind).

Fig. 1

Fig. 2

Fig. 3